# EUROPEAN PATENT SPECIFICATION

(11) **EP 0 631 680 B1**
(45) Date of publication and mention of the grant of the patent: **28.06.2000**
(21) Application number: 93906922.5
(22) Date of filing: 03.03.1993
(51) Int. Cl.: G06K 9/36

(54) **A METHOD OF CARRYING OUT PICTURE PROCESSING OPERATIONS UPON A TWO DIMENSIONAL PICTURE AND A DEVICE FOR CARRYING OUT SAID METHOD**
VERFAHREN UND GERAET ZUR DURCHFUEHRUNG VON VERARBEITUNGSOPERATIONEN AUF ZWEIDIMENSIONALE BILDER
PROCEDE ET DISPOSITIF PERMETTANT D'EFFECTUER DES OPERATIONS DE TRAITEMENT SUR DES IMAGES BIDIMENSIONNELLES

(30) Priority: 10.03.1992 SE 9200726
(43) Date of publication of application: 04.01.1995
(73) Proprietor: IVP INTEGRATED VISION PRODUCTS AB, S-583 30 Linköping (SE)
(72) Inventor: FORCHHEIMER, Robert, S-582 49 Linköping (SE); ASTRÖM, Anders, S-582 47 Linköping (SE)
(74) Representative: Willquist, Bo
(86) International application number: SE9300182
(87) International publication number: WO9318481

(56) References cited:
- US-A- 4 491 962

## Description

The present invention relates to a method of executing image processing operations such as object recognition or linear/ non-linear filtration on a two-dimensional image, which is performed with light-sensitive sensor elements executed in two-dimensional matrix form and so arranged as to produce an output signal corresponding to the light intensity. In accordance with an alternative method, the sensor elements are of the light-integrating type, i.e. the output signal of each sensor element corresponds to its state of charge.

The invention also relates to an arrangement for the execution of an image processing operation such as object recognition or linear/non-linear filtration on a two-dimensional image comprising a number of sensor elements arranged on a substrate, in association with each of which there is allocated on the substrate a comparator so arranged as to compare the output signal of the sensor element with a pre-adjustable reference value and a sub-processor.

The area of "computerized image analysis" began to be developed in the 1960s, at a time when it became technically possible to use a computer to process the image signal from a TV camera. Two fundamental problems had to be overcome. One of these was to make the computer rapid enough to be able to cope with the broad-band image signal, and the other was to have access to a sufficient amount of memory to be able to store the large quantities of data produced by the images.

The first limitation was very difficult to overcome. The development work was accordingly to be concentrated on still images, linked with which was a residual requirement to be able to store the image in the working memory of the computer, satisfactory solutions to which were found in the early 1970s through the development of memory techniques.

The system solution arrived at in this way using a TV camera, the signal from which is converted in an analogue/digital (A/D) manner and is stored in an image memory for processing in the computer, has had such a marked effect on the area of image processing that it is still practically the sole system concept, even today. The concept is also underpinned by the fact that even today's computers are too slow to be able to process moving images at the rate at which they are delivered from the camera.

Previously disclosed via US-A-4,684,991 is an arrangement for an array of photo-diodes arranged in matrix form. These are connected to an image processing processor of the kind which permits parallel signal processing and which is integrated on the same semi-conductor slice as the photo-diodes. Also integrated on the same semi-conductor slice and connected to the processor slice is a digital network of a combinative or sequential kind so arranged as to produce a numerical and/or positional determination of the image element, which has been found to satisfy a digital condition via the photo-diodes and the image processing processor.

The previously disclosed arrangement permits the execution of operations such as surface area and centre of mass calculations, but is not applicable to the execution of general image processing operations such as median filtration, for example.

One object of the present invention is to provide a method of the kind referred to by way of introduction, which permits increased opportunities to perform a wider range of usable image processing operations. This is achieved in accordance with the invention in that for each sensor element the output signal is compared with a monotone increasing or reducing reference value, and in that the fact whether the output signal from the sensor element is greater than or less than the reference value is continuously monitored for each sensor element. An alternative method, which calls for sensor elements of the light-integrating type, is characterized in that for each sensor element the output signal is compared with a pre-adjustable reference value, and in that the fact whether the output signal from the sensor element meets or does not meet the reference value is continuously monitored for each sensor element.

In accordance with one particular characteristic of the invention, the aforementioned reference value is allowed to vary so that a predetermined relationship, for example a linearization, is achieved between the light intensity and the time at which the output signal of the sensor element reached the reference value.

In accordance with a second particular characteristic of the invention, in a group of sensor elements in the matrix for each sensor element the output signals of the sensor elements in the group are sorted in a series corresponding to the times at which the output signals from the sensor elements pass the aforementioned reference value, and in that the output signal in the middle of the series is chosen as the median value for the sensor elements in the group. In accordance with a further particular characteristic of the invention, the method in accordance with the invention is applied in such a way that the sensor element whose output signal first passes the reference value is identified, which involves detecting the lightest point in the image.

A further development of the method in accordance with the invention involves establishing, for a group of sensor elements in the matrix, the extent to which the output signal has reached the reference value in a predetermined combination of sensor elements, whilst other sensor elements in the group have not done so, which is synonymous with a morphological operation.

An additional further development has been achieved through the accumulation for each sensor element of pulses, the number of which, when the output signal reaches the reference value, is a digital value for the light intensity.

By generating the aforementioned pulses with a variable frequency in this way, a pre-determined relationship, for example a linearization, is achieved between the light intensity and its corresponding digital value.

If, in a group of sensor elements in the matrix, a filter coefficient is allocated to each element in the group, and if associated filter coefficients are successively accumulated for each sensor element in which the output signal has reached the reference value, this is synonymous with a linear filtration.

A pre-determined relationship is achieved in this way, for example a linearization, between the light intensity and the point in time at which the output signal from the sensor element has reached the reference value if the successive accumulation takes place at an appropriately selected variable frequency.

An A/D conversion of the image is achieved by including in the calculation pulses in a digital result directory for each sensor element at a pre-determined frequency during the exposure period.

An arrangement by means of which the method in accordance with the invention can be executed is characterized in that each sub-processor is so arranged as to identify the occurrence of combinations of sensor elements for which the output signal has exceeded or has not exceeded the aforementioned reference value.

In accordance with a further development of the arrangement in accordance with the invention, the sub-processor includes an accumulator directory so arranged either as to count pulses, the number of which, at the time when the output signal reaches the reference value, is an indicator of the light intensity, or as to successively accumulate coefficients associated with an image processing operation during its execution. A propagation network is preferably also arranged on the same substrate as the sensor elements and the sub-processors, wherein the propagation direction of the network is controllable

The invention is described below in greater detail with reference to the accompanying drawings, in which
Fig. 1 illustrates schematically an arrangement in accordance with the invention.
Fig. 2a is an example of an image point structure comprising a sensor element with a comparator and a sub-processor.
Fig. 2b illustrates schematically a controllable propagation network.
Fig. 2c illustrates examples of control information for obtaining different propagation cases.
Fig. 2d illustrates a result image, in which only a single object point is present in the input image, corresponding to the various cases shown in Fig. 2c.
Fig. 3 illustrates the state of charge of the sensor element, i.e. its output signal as a function of time and a reference value.
Fig. 4 illustrates the output signal from a group of three adjacent comparators and the resulting medians.
Fig. 5 illustrates the detection of the lightest point.
Figs. 6a and 6b show the effect of two morphological operations, namely expansion (dilation) and contraction (erosion) in two dimensions and one dimension respectively on a grey scale image (Fig. 6b).
Fig. 6c shows a grey scale image obtained in accordance with the invention, which may be regarded as an extract from the one-dimensional case in accordance with Fig. 6b and as consisting of eight sensor elements.
Figs. 6d and 6e show the effect of morphological filtration, namely expansion (Fig. 6d) and contraction (Fig. 6e) on the result in accordance with Fig. 6c.
Fig. 7 illustrates linear filtration in accordance with the invention.

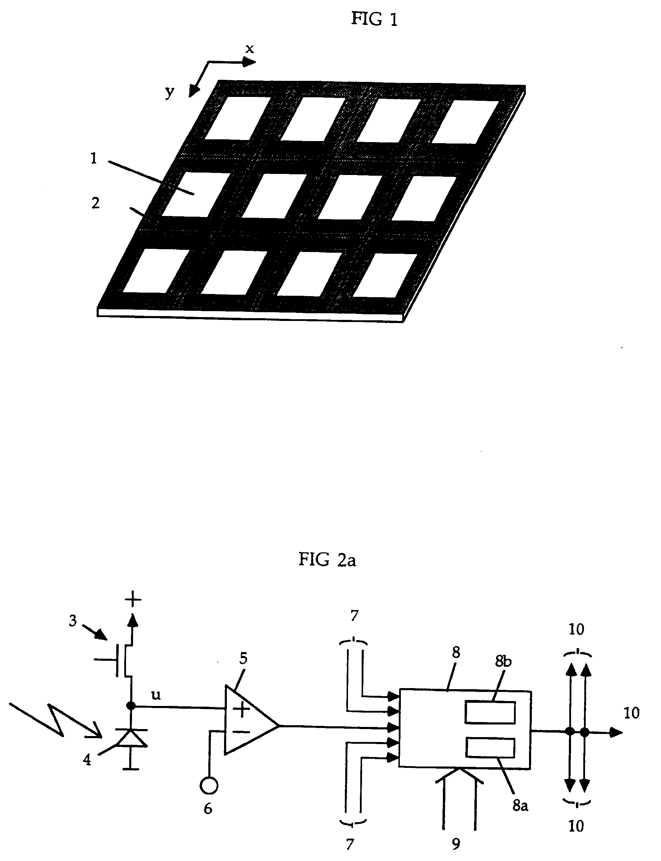

The designation 1 is used in Fig. 1 for a sensor element in a matrix with a total of twelve sensor elements arranged on a substrate. A comparator and a sub-processor, both designated by 2, are allocated to each of the sensor elements 1 on the substrate.

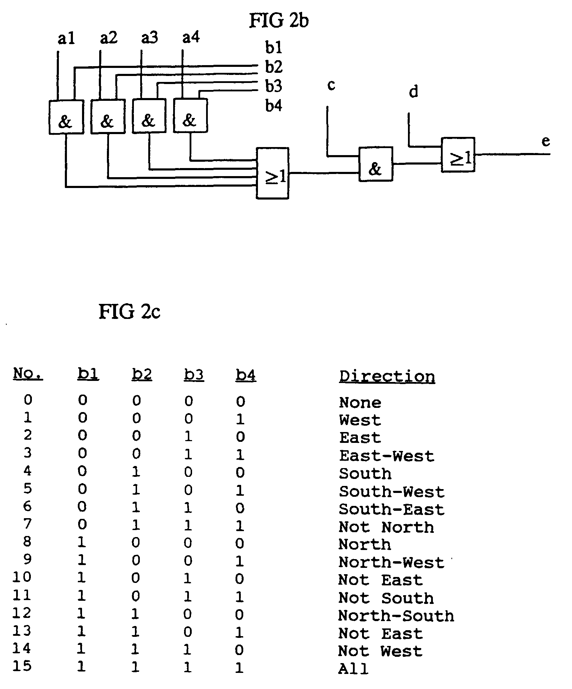

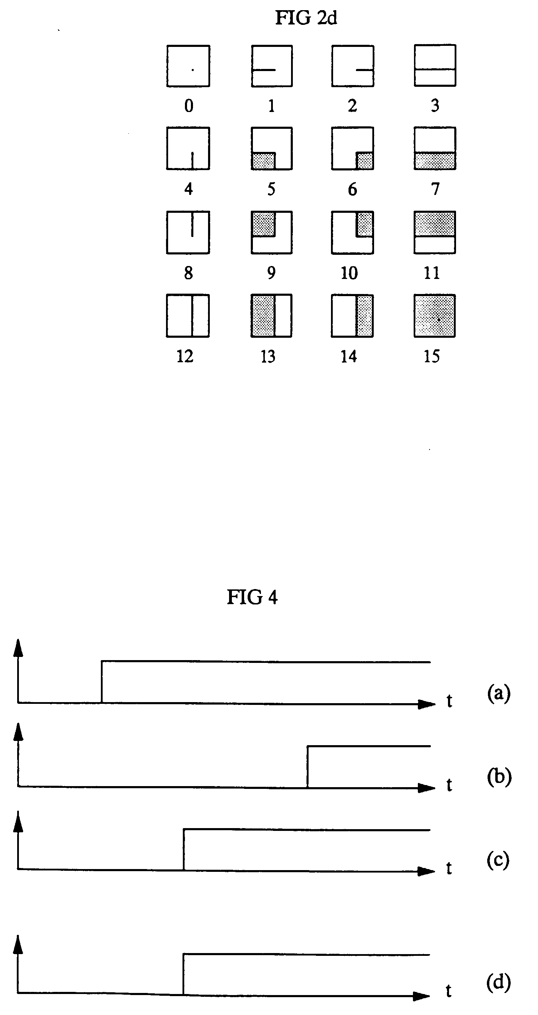

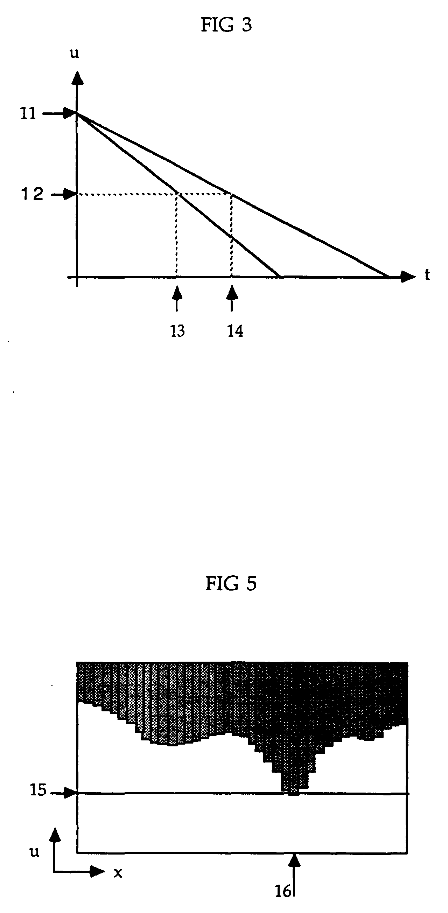

Fig. 2a illustrates in the form of a block diagram the mutual connection between the sensor elements, comparators and sub-processors. The designation 4 is used in respect of a sensor element of the light-integrating type, such as a photo-diode, and the designation 3 in respect of a charging arrangement for charging the photo-diode 4 prior to a light reading. Connected to the photo-diode 4, the output voltage. u of which represents its state of charge, is a comparator 5 in the form of a differential amplifier. The output from the comparator 5 is connected to an input to a sub-processor 8, in this case with four further inputs designated by 7 and five outputs designated by 10. The aforementioned inputs 7 are connected to the outputs on the sub-processors of adjacent photo-diodes, whereas the outputs from the sub-processor 8 are similarly connected to the inputs to the sub-processors of adjacent photo-diodes. The sub-processor 8 comprises an accumulator directory 8a and a propagation network 8b, a detailed description of which is given subsequently in conjunction with Figs. 2b, 2c and 2d. The designation 6 is used in respect of an input for a reference value (12 in Fig. 3) for the comparator 5, and the designation 9 is used in respect of instructions arriving at the sub-processor 8.

The arrangement in accordance with the invention works as follows: with the help of the charging arrangement 3, the photo-diode 4 is charged to an initial value. When light, shown in Fig. 2a as a zig-zag arrow, falls on the photo-diode 4, its state of charge changes in time in proportion to the intensity of the incident light. The voltage u corresponding to the state of charge, the pattern of which can be appreciated from Fig. 3, is compared with the reference value 12. The output signal from the comparator 5 is binary and is supplied to one of the inputs 7 of the sub-processor 8. The binary output signal from the comparator 5 is logic 1 when u is greater than the reference value 12, and is otherwise logic 0. The sub-processor 8 is so arranged, with the help of output signals from photo-diodes belonging to the comparator, which in the matrix are next to the photo-diode 4, as to identify the occurrence of combinations of any photo-diodes for which the output signal of an associated comparator has exceeded or has not exceeded the aforementioned reference value. These combinations are selected having regard for the desired image processing and are described in more detail below in conjunction with Figures 4-7.

The job of the propagation network 8b in Fig. 2b is to propagate signals in an asynchronous fashion over the matrix. The inputs a1, a2 ... a4 of the network are connected to the e-outputs from the propagation network of the closest neighbours. The inputs b1 - b4 provide inputs for control information. The c-inputs are used to control distribution, which permits the distribution to be inhibited.

The input image, which consists of a single point in the example shown in Fig. 2d, is entered via the input d. The resulting image is obtained at the e-output. The direction of propagation is determined by an item of control data, which may be individual or identical for all the sub-processors. The item of control data is preferably stored in a directory in each sub-processor. The propagation network shown in Fig. 2b represents only one way of constructing such a network, and a person skilled in the art will appreciate that Boolean algebra can be used to vary the construction in may ways. The propagation network can be used, for example, to mark those objects in an image which, at least in part, coincide with objects in another image. The propagation means that a distribution in accordance with a particular pattern is obtained from each object point. The table in Fig. 2c shows the direction of propagation obtained using certain control information, and Fig. 2d illustrates the resulting image when only a single object point is present in the input image. No. 1, for example, with the control information b1 = 0, b2 = 0, b3 = 0 and b4 = 1, gives the distribution from the object points to the west. No. 5 shows a case in which the distribution runs in both a southerly and a westerly direction.

The points 13 and 14 in Fig. 3 represent points in time corresponding to the passage of the reference value 12 by two different discharge curves. The designation 11 is used in respect of The initial value produced by the charging arrangement 3 (in Fig. 1). As will be appreciated from the following, a large proportion of the present invention is based on this fact.

Fig. 4 illustrates how the invention is used in conjunction with median calculation. The output signal as a function of the time from the comparator belonging to three adjacent photo-diodes can be found in diagrams a, b and c. A person skilled in the art will appreciate that the expression median value is used to denote the middle grey scale value. This median value is obtained in accordance with the invention by using the sub-processor to sort into sequence the times at which the output signals from the photo-diodes pass the reference value. The median d thus corresponds here to the element corresponding to diagram c, whereas diagrams a and b correspond respectively to lighter or darker points.

In Fig. 5, rastered columns represent the discharge sequence from a number of photo-diodes arranged in a row. The bases of the columns together provide an instantaneous picture of the state of charge of the photo-diodes and thus correspond to the light intensity along the row of diodes. Determination of the lightest point is achieved in accordance with the invention by entering a reference level 15 and identifying the photo-diode 16 of which the base of the column first reaches the reference value. The lightest point is conventionally determined by comparing all the values with one another in sequence, and a person skilled in the art will appreciate the simplification and the increase in speed that are achieved through the invention. A person skilled in the art will appreciate that the operation can also be performed in two dimensions.

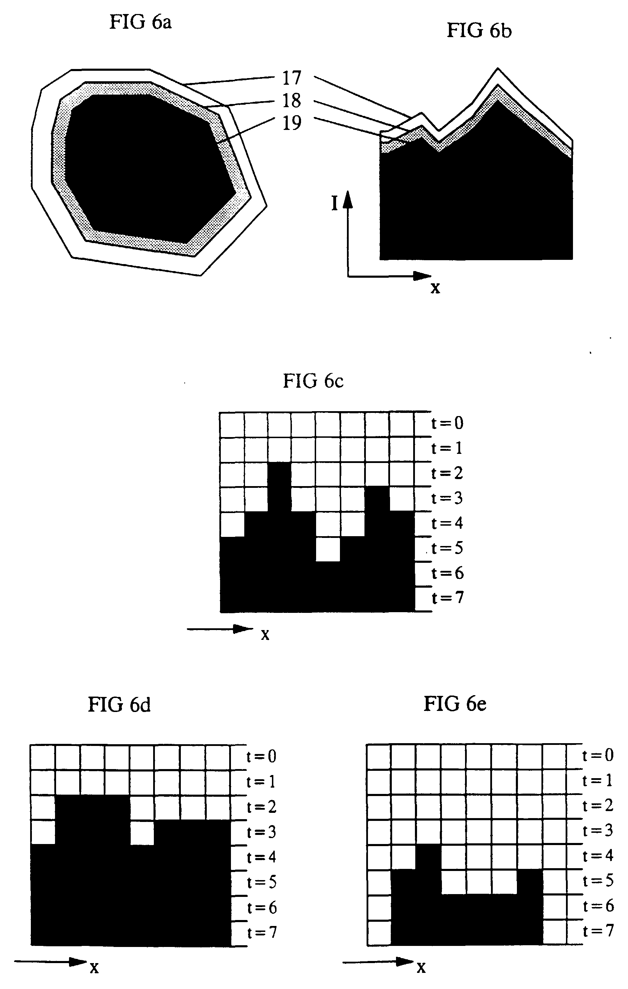

The contraction image processing operation involves peeling away the outermost layer of an object. Similarly, expansion involves applying an outer layer to an object. This is illustrated in Fig. 6a for a two-dimensional binary object 18. The designation 19 is applied to the contracted object, and the designation 17 to the expanded object. Fig. 6b shows corresponding operations in grey scale values (I), although only in a single dimension for reasons of clarity. The grey scale image in accordance with Fig. 6c represents the times at which the state of charge of eight photo-diodes reached the reference value. Expansion is obtained in accordance with the invention in that readings are taken successively for a group, for example consisting of three adjacent photo-diodes, of the times at which the state of charge of any photo-diode in the group reached the reference value, and in that the diode concerned acts as the central diode for the group of diodes, all of which are then regarded as having reached the reference value. The result of the expansion operation can be seen from Fig. 6d. A similar situation applies to contraction, where the requirement is for all the diodes in the group to have reached the reference value; the result of the contraction operation can be appreciated from Fig. 6e.

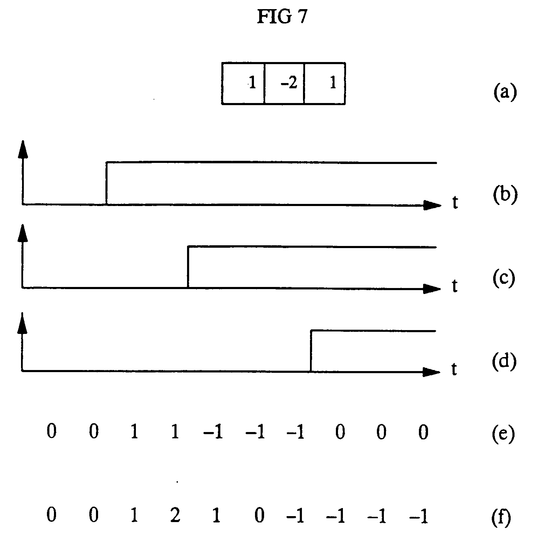

The linear filtration operation involves replacing the grey-scale value at a point by a weighted sum of the point and its surroundings. Illustrated in Fig. 7 is an example of a point and its neighbour to the right and to the left. Weightings of 1, -2 and 1 are used, as can be appreciated from Fig. 7 (a). The output signals from the associated comparator are shown in diagrams (b), (c) and (d). The linear filtration operation is performed in accordance with the invention in that the associated filter coefficient is accumulated at a fixed or variable frequency for each photo-diode with a state of charge that has reached the reference value. Fig. 7 (e) indicates the value to be added to the accumulator 8a, and Fig. 7 (f) indicates the contents of the accumulator after addition. In the illustrative example the filtered value is thus -1 and was obtained after the state of charge of the photo-diode on the right reached the reference value.

It is obvious that the invention may be varied and modified in many ways within the scope of the idea of invention. Sensor elements and associated sub-processors can thus be arranged on different planes. The sub-processor can, of course, include circuits for calculating numbers, determining positions and calculating the centre of mass.

## Claims

1. Method of executing image processing operations such as object recognition or linear/ non-linear filtration on a two-dimensional image, which is performed with light-sensitive sensor elements (1;4) executed in two-dimensional matrix form, *characterized in that* the sensor elements (1;4) are so arranged as to produce an output signal (u) corresponding to the light intensity, in that for each sensor element (1;4) the output signal (u) is compared with a monotone increasing or reducing reference value, and in that the fact whether the output signal from the sensor element is greater than or less than the reference value is continuously monitored for each sensor element.

2. Method of executing image processing operations such as object recognition or linear/ non-linear filtration on a two-dimensional image, which is performed with light-sensitive sensor elements executed in two-dimensional matrix form, *characterized in that* the light-sensitive sensor elements are of the light-integrating type, i.e. the output signal of each sensor element corresponds to its state of charge, in that for each sensor element (1;4) the state of charge of the sensor element, corresponding to the intensity of the light incident upon the sensor element, is compared with a pre-adjustable reference value (12), and in that the fact whether the output signal from the sensor element (1;4) meets or does not meet the reference value (12) is continuously monitored for each sensor element.

3. Method in accordance with Patent Claims 1 or 2, *characterized in that* the aforementioned reference value (12) is allowed to vary so that a predetermined relationship, for example a linearization, is achieved between the light intensity and the time at which the output signal of the sensor element reached the reference value.

4. Method in accordance with Patent Claims 1, 2 or 3, *characterized in that* in group of sensor elements in the matrix for each sensor element the output signals of the sensor elements in the group are sorted in a series corresponding to the sequence in which the output signals from the sensor element pass the aforementioned reference value, and in that the output signal in the middle of the series is chosen as the median value for the elements in the group.

5. Method in accordance with Patent Claims 1, 2 or 3, *characterized in that* the sensor element whose output signal first passes the reference value is identified, which involves detecting the lightest point in the image (Fig. 5)

6. Method in accordance with Patent Claims 1, 2 or 3, *characterized in that*, for a group of sensor elements in the matrix, the fact whether the output signal has reached the reference value in a predetermined combination of sensor elements is established, whilst other sensor elements in the group have not done so, which is synonymous with a morphological operation (Figs. 6a, 6b).

7. Method in accordance with Patent Claims 1, 2 or 3, *characterized in that* there are accumulated for each sensor element pulses, the number of which, when the output signal reaches the reference value, is a digital value for the light intensity.

8. Method in accordance with Patent Claim 7, *characterized in that* the aforementioned pulses are generated with a variable frequency, so that a pre-determined relationship, for example a linearization, is achieved between the light intensity and its corresponding digital value.

9. Method in accordance with claims 1, 2 or 3, **characterized** in that, in a group of sensor elements in the matrix a filter coefficient is allocated to each element in the group, and in that associated filter coefficients are successively accumulated for each sensor element in which the output signal has reached the reference value, which is synonymous with a linear filtration (Fig. 7).

10. Method in accordance with claim 9, **characterized** in that the successive accumulation takes place at a valiable frequency, so that a predetermined relationship, for example a linearization, is achieved between the light intensity and the time at which the state of charge of the sensor element reached the reference value.

11. Arrangement for the execution of the method in accordance with claims 1 or 2, comprising a number of sensor elements (1;4) arranged on a substrate, in association with each of which there is allocated on the substrate a comparator (5) so arranged as to compare the output signal of the sensor element with a pre-adjustable reference value (12) and a sub-processor (2;8), **characterized** in that each sub-processor (2;8) is so arranged as to identify the occurrence of combinations of sensor elements (1;4) for which the output signal has exceeded or has not exceeded the aforementioned reference value (12).

12. Arrangement in accordance with claim 11, **characterized** in that the sub-processor includes an accumulator directory (8a) so arranged either as to count pulses, the number of which, at the time when the output signal reaches the reference value (12), is an indicator of the light intensity, or as to successively accumulate coefficients associated with an image processing operation during its execution.

13. Arrangement in accordance with claim 11, **characterized** in that a propagation network (8b) is preferably arranged on the substrate, wherein the propagation direction of the network (86) is controllable.

## Patentansprüche

1. Verfahren zur Ausführung von Bildverarbeitungsoperationen wie Objekterkennung oder lineare/nicht lineare Filterung eines zweidimensionalen Bildes, das mit lichtempfindlichen Sensorelementen (1; 4) in zweidimensionaler Matrixform ausgeführt ist, dadurch gekennzeichnet, daß die Sensorelemente (1; 4) so angeordnet sind, daß sie ein Ausgangssignal (u) entsprechend der Lichtstärke erzeugen, daß für jedes Sensorelement (1; 4) das Ausgangssignal (u) mit einem monoton steigenden oder fallenden Sollwert verglichen wird, und daß die Tatsache, ob das Ausgangssignal des Sensorelements größer oder kleiner als der Sollwert ist, für jedes Sensorelement fortlaufend überwacht wird.

2. Verfahren zur Ausführung von Bildverarbeitungsoperationen wie Objekterkennung oder lineare/nicht lineare Filterung eines zweidimensionalen Bildes, das mit lichtempfindlichen Sensorelementen (1; 4) in zweidimensionaler Matrixform ausgeführt wird, dadurch gekennzeichnet, daß die lichtempfindlichen Sensorelemente vom lichtintegrierenden Typ sind, was bedeutet, daß das Ausgangssignal jedes Sensorelements (1; 4) seinem Ladungszustand entspricht, daß für jedes Sensorelement (1; 4) der Ladungszustand, der der Stärke des Lichteinfalls auf das Sensorelement entspricht, mit einem voreinstellbaren Sollwert (12) verglichen wird, und daß die Tatsache, ob das Ausgangssignal des Sensorelementes (1; 4) dem Sollwert (12) entspricht oder nicht entspricht, für jedes Sensorelement fortlaufend überwacht wird.

3. Verfahren nach Anspruch 1 oder 2, dadurch gekennzeichnet, daß der oben genannte Sollwert (12) so variieren darf, daß eine vorbestimmte Beziehung, z.B. eine Linearisierung, zwischen der Lichtstärke und dem Zeitpunkt, in dem das Ausgangssignal den Sollwert erreichte, erhalten wird.

4. Verfahren nach Anspruch 1, 2 oder 3 dadurch gekennzeichnet, daß in einer Gruppe von Sensorelementen in der Matrix für jedes Sensorelement die Ausgangssignale der Sensorelemente in einer Reihe entsprechend der Abfolge, in denen die Ausgangssignale der Sensorelemente den zuvor erwähnten Sollwert durchschreiten, sortiert werden, und daß das Ausgangssignal in der Mitte der Reihe als Mittelwert der Sensorelemente in der Gruppe gewählt wird.

5. Verfahren nach Anspruch 1, 2 oder 3 dadurch gekennzeichnet, daß das Sensorelement, dessen Ausgangssignal als erstes den Sollwert durchschreitet, identifiziert wird, was die Erkennung des hellsten Punktes im Bild mit einschließt (Fig. 5).

6. Verfahren nach Anspruch 1, 2 oder 3, dadurch gekennzeichnet, daß die Tatsache, ob das Ausgangssignal einer Gruppe von Sensorelementen in der Matrix den Sollwert in einer vorbestimmten Kombination von Sensorelementen erreicht hat, während andere Elemente in der Gruppe dies nicht haben, nachgewiesen wird, was identisch einer morphologischen Operation ist (Fig. 6a, 6b).

7. Verfahren nach Anspruch 1, 2 oder 3, dadurch gekennzeichnet, daß für jedes Sensorelement Pulse aufaddiert werden, wobei ihre Anzahl zu dem Zeitpunkt, in dem das Ausgangssignal den Sollwert erreicht, einen digitalen Wert für die Lichtstärke darstellt.

8. Verfahren nach Anspruch 7, dadurch gekennzeichnet, daß die oben genannten Pulse mit einer variablen Frequenz so erzeugt werden, daß sich eine vorbestimmte Beziehung, z.B. eine Linearisierung, zwischen der Lichtstärke und ihrem entsprechenden Digitalwert ergibt.

9. Verfahren nach Anspruch 1, 2 oder 3, dadurch gekennzeichnet, daß in einer Gruppe von Sensorelementen in der Matrix jedem Sensorelement in der Gruppe ein Filterkoeffizient zugeordnet wird, und daß die zugeordneten Filterkoeffizienten für jedes Sensorelement, dessen Ausgangssignal den Sollwert erreicht hat, fortlaufend aufaddiert werden, was einer linearen Filterung entspricht (Fig. 7).

10. Verfahren nach Anspruch 9, dadurch gekennzeichnet, daß die fortlaufende Aufaddierung bei unterschiedlichen Frequenzen erfolgt, so daß eine vorbestimmte Beziehung, wie z.B. eine Linearisierung, zwischen der Lichtstärke und der Zeit, zu der der Ladungszustand des Sensorelements den Sollwert erreicht, erhalten wird.

11. Anordnung zur Ausführung des Verfahrens nach Anspruch 1 oder 2, die eine Anzahl von Sensorelementen (1; 4), die auf einem Substrat angeordnet sind, wobei jedem ein Komparator (5) auf dem Substrat zugeordnet ist, der so angeordnet ist, daß das Ausgangssignal des Sensorelements mit einem voreinstellbaren Sollwert verglichen wird, sowie einen Subprozessor (2; 8) aufweist, dadurch gekennzeichnet, daß jeder Subprozessor (2; 8) so angeordnet ist, daß er das Auftreten von Kombinationen von Sensorelementen (1; 4) erkennen kann, deren Ausgangssignal den zuvor erwähnten Sollwert (12) durchschritten oder nicht durchschritten hat.

12. Anordnung nach Anspruch 11, dadurch gekennzeichnet, daß der Subprozessor ein Addiererverzeichnis (8a) beinhaltet, das so angeordnet ist, daß es entweder Pulse zählt, deren Anzahl in dem Zeitpunkt, in dem das Ausgangssignal den Sollwert erreicht, ein Indikator der Lichtstärke ist, oder um fortlaufend Koeffizienten auf zuaddieren, die einer Bildverarbeitungsoperation während ihrer Ausführung zugeordnet sind.

13. Anordnung nach Anspruch 11, dadurch gekennzeichnet, daß ein Ausbreitungsnetzwerk (8b) vorzugsweise auf dem Substrat angeordnet ist, wobei die Ausbreitungsrichtung auf dem Netzwerk (8b) einstellbar ist.

## Revendications

1. Procédé d'exécution d'opérations de traitement d'image telles qu'une reconnaissance d'objet ou une filtration linéaire/non linéaire sur une image bidimensionnelle, qui est mis en oeuvre avec des éléments de détection sensibles à la lumière (1 ; 4) disposés sous forme de matrice bidimensionnelle, caractérisé en ce que:
les éléments de détection (1 ; 4) sont agencés de façon à produire un signal de sortie (u) correspondant à l'intensité de lumière,
en ce que, pour chaque élément de détection (1 ; 4), le signal de sortie (u) est comparé à une valeur de référence croissante ou décroissante monotone, et
en ce que le fait que le signal de sortie de l'élément de détection est soit plus grand soit plus petit que la valeur de référence est continuellement contrôlé pour chaque élément de détection.

2. Procédé d'exécution d'opérations de traitement d'images telles qu'une reconnaissance d'objet ou une filtration linéaire/non linéaire sur une image bidimensionnelle, qui est mis en oeuvre avec des éléments de détection sensibles à la lumière (1 ; 4) disposés sous forme de matrice bidimensionnelle, caractérisé en ce que:
les éléments de détection sensibles à la lumière sont du type à intégration de lumière, c'est-à-dire que le signal de sortie de chaque élément de détection correspond à son état de charge,
en ce que, pour chaque élément de détection (1 ; 4), l'état de charge de l'élément de détection, correspondant à l'intensité de la lumière incidente sur l'élément de détection, est comparé à une valeur de référence préréglable (12) et,
en ce que le fait que le signal de sortie de l'élément de détection (1 ; 4) rencontre ou ne rencontre pas la valeur de référence (12) est continuellement contrôlé pour chaque élément de détection.

3. Procédé selon la revendication 1 ou 2, caractérisé en ce que la valeur de référence précitée (12) peut varier de sorte qu'une relation prédéterminée, par exemple une linéarisation, est obtenue entre l'intensité de lumière et l'instant auquel le signal de sortie de l'élément de détection a atteint la valeur de référence.

4. Procédé selon les revendications 1, 2 ou 3, caractérisé en ce que, dans un groupe d'éléments de détection dans la matrice, pour chaque élément de détection, les signaux de sortie des éléments de détection du groupe sont classés en une série correspondant à la séquence dans laquelle les signaux de sortie de l'élément de détection franchissent la valeur de référence précitée, et en ce que le signal de sortie au milieu de la série est choisi comme valeur médiane pour les éléments de détection dans le groupe.

5. Procédé selon les revendications 1, 2 ou 3 caractérisé en ce que l'élément de détection dont le signal de sortie franchit le premier la valeur de référence est identifiée, ce qui implique une détection du point le plus clair dans l'image (figure 5).

6. Procédé selon les revendications 1, 2 ou 3 caractérisé en ce que, pour un groupe d'éléments de détection dans la matrice, le fait que le signal de sortie a atteint la valeur de référence dans une combinaison prédéterminée d'éléments de détection est établi, tandis que les autres éléments de détection dans le groupe ne l'ont pas fait, ce qui est synonyme d'une opération morphologique (figures 6a, 6b).

7. Procédé selon les revendications 1, 2 ou 3 caractérisé en ce qu'on accumule, pour chaque élément de détection, des impulsions dont le nombre, lorsque le signal de sortie atteint la valeur de référence, est une valeur numérique pour l' intensité de lumière.

8. Procédé selon la revendication 7, caractérisé en ce que les impulsions précitées sont engendrées à une fréquence variable, de sorte qu'on obtient une relation prédéterminée, par exemple une linéarisation, entre l'intensité de lumière et sa valeur numérique correspondante.

9. Procédé selon les revendications 1, 2 ou 3, caractérisé en ce que, dans un groupe d'éléments de détection dans la matrice, un coefficient de filtre est attribué à chaque élément dans le groupe, et en ce qu'on accumule successivement les coefficients de filtre associés pour chaque élément de détection dans lequel le signal de sortie a atteint la valeur de référence, ce qui est synonyme d'une filtration linéaire (figure 7).

10. Procédé selon la revendication 9, caractérisé en ce que l'accumulation successive a lieu à une fréquence variable, de sorte qu'on obtient une relation prédéterminée, par exemple une linéarisation, entre l'intensité de lumière et l'instant auquel l'état de charge de l'élément de détection a atteint la valeur de référence.

11. Dispositif pour la mise en oeuvre du procédé selon les revendications 1 ou 2, comprenant une pluralité d'éléments de détection (1 ; 4) disposés sur un substrat, en association avec chacun desquels un comparateur (5) est attribué, sur le substrat, ce comparateur étant agencé pour comparer le signal de sortie de l'élément de détection avec une valeur de référence préréglable (12), ainsi qu'un sous-processeur (2 ; 8), caractérisé en ce que chaque sous-processueur (2 ; 8) est prévu de façon à identifier l'occurrence de combinaisons d'éléments de détection (1 ; 4) pour lesquelles le signal de sortie a dépassé ou n'a pas dépassé la valeur de référence précitée (12).

12. Dispositif selon la revendication 11, caractérisé en ce que le sous-processeur comprend un répertoire d'accumulateur (8a) agencé soit de façon à compter des impulsions dont le nombre, à l'instant où le signal de sortie atteint la valeur de référence (12), est un indicateur de l'intensité de lumière, soit de façon à accumuler successivement les coefficients associés à une opération de traitement d'image pendant son exécution.

13. Dispositif selon la revendication 11, caractérisé en ce qu'un réseau de propagation (8b) est de préférence prévu sur le substrat, et la direction de propagation du réseau (8b) peut être commandée.
